# DEMANDE DE BREVET EUROPEEN

(11) **EP 3 026 330 A1**
(43) Date de publication de la demande: **01.06.2016**
(21) Numéro de dépôt: 15192834.8
(22) Date de dépôt: 03.11.2015
(51) Int. Cl.: F21S 8/10, F21V 14/00, G06K 9/00, G01J 3/28, G01N 21/64

(54) **SYSTÈME D'ÉCLAIRAGE POUR VÉHICULE AUTOMOBILE À MOYENS STATIQUES DE BALAYAGE DE FAISCEAU LUMINEUX**

(30) Priorité: 27.11.2014 FR 1461589
(71) Demandeur: VALEO VISION, 93012 Bobigny Cedex (FR)
(72) Inventeur: ALBOU, Pierre, 75013 PARIS (FR); PUENTE, Jean-Claude, 93190 LIVRY GARGAN (FR); GODBILLON, Vincent, 75011 PARIS (FR)

(57) **Abrégé**

La présente invention concerne un système d'éclairage (10) qui comprend une source de lumière (12) apte à produire un faisceau lumineux (L), et des moyens statiques (14) pour balayer le faisceau lumineux comportant au moins un corps de déviation (18) de la trajectoire du faisceau. Les moyens statiques de balayage (14) le faisceau lumineux (L) comprennent de plus des moyens optiques (28) d'amplification de la déviation de la trajectoire du faisceau lumineux, placés en aval du corps de déviation (18) en considérant le sens de propagation du faisceau lumineux (L).

## Description

La présente invention concerne le domaine technique des systèmes d'éclairage pour véhicule automobile. Plus particulièrement, l'invention concerne un système d'éclairage formant un projecteur pour véhicule automobile.

Un projecteur de véhicule automobile a pour principale fonction d'éclairer la route, et comprend divers systèmes optiques et sources de lumière.

Il est connu de faire fonctionner un projecteur selon deux modes.

Le premier mode, communément appelé « feu de croisement », produit un éclairage légèrement dévié vers le bas afin d'éclairer la route à l'avant du véhicule sur environ une cinquantaine de mètres et de ne pas éblouir d'éventuels automobilistes qui circuleraient en sens inverse sur une voie adjacente. Dans ce mode de fonctionnement, le conducteur est capable de mieux percevoir l'environnement à courte distance s'il circule de nuit ou par des conditions météorologiques difficiles (brouillard, neige, pluie).

Le second mode de fonctionnement, couramment appelé « feu de route », produit un éclairage de forte intensité vers l'avant du véhicule et permet de considérablement accroître le champ de vision du conducteur, notamment de nuit et en cas de neige ou de pluie. En revanche, l'orientation du faisceau lumineux est susceptible dans ce cas d'éblouir des automobilistes circulant en sens inverse sur une voie adjacente ou circulant devant sur la même voie, c'est pourquoi il est nécessaire de basculer en feu de croisement dès que cette situation se présente.

Il est également connu de prévoir un mode de fonctionnement supplémentaire du projecteur dit ADB (d'après le sigle anglais pour *Adaptive Driving Beam*) ou encore « faisceau sélectif » produisant un éclairage du type « feu de route » partiellement masqué pour éviter l'éclairage de zones où sont présents des véhicules venant en sens inverse ou des véhicules roulant devant. On évite ainsi l'éblouissement des autres conducteurs tout en conservant un grand champ de vision. On pourra se référer au document EP-2 415 638 pour plus de précisions sur le mode de fonctionnement ADB.

Dans ce dernier mode de fonctionnement, le « faisceau sélectif » est produit par projection d'une image lumineuse formée par balayage d'un rayonnement lumineux.

Pour obtenir une image de taille satisfaisante, il faut réaliser le balayage sur un secteur angulaire soit d'angle important soit de rayon important. Dans ce dernier cas (rayon important) le trajet optique est relativement long si bien que les moyens pour réaliser l'image à projeter sont relativement encombrants. Au vu des contraintes d'encombrement de plus en plus sévères à l'avant d'un véhicule, on préfère donc retenir de réaliser le balayage sur un secteur angulaire d'angle important, plutôt que de rayon important. Le balayage doit donc couvrir un secteur angulaire qui soit suffisamment grand, par exemple de l'ordre de 15°, afin de créer une image lumineuse suffisamment grande.

On connaît déjà dans l'état de la technique des dispositifs de déviation de faisceau lumineux comprenant par exemple des moyens électro-optiques, acousto-optiques ou mécano-optiques. Certains de ces moyens ont l'avantage d'être statiques, ce qui limite leur usure par rapport à des moyens dynamiques. Ainsi on connait déjà dans l'état de la technique des moyens statiques pour balayer un faisceau lumineux comportant au moins un corps de déviation de la trajectoire du faisceau lumineux et des moyens de pilotage du corps de déviation. Toutefois, tous ces dispositifs ne peuvent dévier un faisceau au maximum que de 2°. En particulier, l'homme du métier est dissuadé d'utiliser des moyens statiques de déviation du fait de l'angle de déviation faible qu'ils procurent.

Le document EP-2 690 352 propose de remédier à ce problème au moyen d'un système de balayage comportant des micro-miroirs articulés capables de balayer un faisceau lumineux sur un secteur angulaire satisfaisant.

Cependant, ce système soulève plusieurs problèmes.

En effet, les micro-miroirs sont fragiles mécaniquement car ils sont soumis à des vibrations et à des chocs pouvant dérégler leurs axes d'articulation voire les briser. De plus, ils sont fragiles thermiquement car leur coefficient de réflexion n'est pas strictement égal à 100% (il est généralement de l'ordre de 90 à 99%). Les micro-miroirs doivent donc absorber une partie de l'énergie transportée par le faisceau lumineux et leur faible capacité thermique (qu'implique leur faible volume) engendre par conséquent une élévation de température non négligeable pouvant les détériorer.

Par ailleurs, du fait que les miroirs parcourent des micro-déplacements, ils sont soumis à des contraintes de fatigue les détériorant progressivement.

Enfin, la commande d'un tel système à micro-miroirs est relativement complexe.

L'invention a pour but de fournir un système d'éclairage muni de moyens de balayage formant une image destinée à être projetée, ces moyens de balayage couvrant un secteur angulaire suffisamment important, et ce avec des moyens simples, statiques et robustes.

A cet effet, on prévoit selon l'invention un système d'éclairage pour véhicule automobile, comprenant
- une source de lumière apte à produire un faisceau lumineux, et
- des moyens statiques pour balayer le faisceau lumineux comportant au moins un corps de déviation de la trajectoire du faisceau lumineux et des moyens de pilotage du corps de déviation,
caractérisé en ce que les moyens statiques de balayage comprennent de plus des moyens optiques d'amplification de la déviation de la trajectoire du faisceau lumineux, placés en aval du corps de déviation en considérant le sens de propagation du faisceau lumineux.

Ainsi, les moyens statiques pour balayer le faisceau lumineux permettent de couvrir un secteur angulaire de l'ordre de 2°, et les moyens optiques d'amplification permettent de l'amplifier afin d'atteindre un angle de secteur angulaire satisfaisant.

Les moyens de réglage de la déviation sont statiques, si bien qu'ils ne subissent aucune contrainte de fatigue. Les éléments participant à la déviation du faisceau lumineux étant le corps de déviation, les moyens de pilotage du corps de déviation et les moyens optiques d'amplification, on comprend bien que ce système d'éclairage est plus robuste et de conception plus simple que celui de l'art antérieur comprenant des micro-miroirs.

Selon un premier mode de réalisation, le corps de déviation est un corps réfléchissant apte à réfléchir le faisceau lumineux, et les moyens de pilotage du corps de déviation comprennent des moyens de génération d'une onde de pression stationnaire dans le corps réfléchissant, cette onde étant pilotable en fréquence pour balayer le faisceau lumineux.

Un réseau de diffraction apparaît ainsi à la surface du corps réfléchissant, dont le pas est piloté par l'onde de pression stationnaire, qui est pilotée en fréquence. Le pilotage du pas permet de piloter un balayage du faisceau lumineux.

Avantageusement, le corps réfléchissant comporte une surface réfléchissante du faisceau lumineux formant un réseau de diffraction.

On fait ainsi varier le pas du réseau de diffraction déjà existant au moyen de l'onde de pression stationnaire générée par les moyens de pilotage du corps de déviation.

Selon un autre mode de réalisation, le corps de déviation est un corps transparent, traversé par le faisceau lumineux, et les moyens de pilotage du corps de déviation comprennent des moyens de génération d'une onde de pression stationnaire dans le corps transparent, cette onde étant pilotable en fréquence pour balayer le faisceau lumineux.

Ainsi, l'onde de pression stationnaire fait perdre au corps transparent l'uniformité de son indice de réfraction, qui présente alors des minima locaux et des maxima locaux correspondant aux noeuds et aux ventres de l'onde de pression stationnaire. La non uniformité périodique de l'indice de réfraction dans le corps transparent entraîne une déviation du faisceau lumineux. Le pilotage de la fréquence de l'onde de pression stationnaire permet de piloter la position des noeuds et des ventres de l'onde, et donc de piloter un balayage du faisceau lumineux.

Selon un autre mode de réalisation, le corps de déviation est un corps transparent de réfraction du faisceau lumineux, par exemple un prisme, et les moyens de pilotage du corps de déviation comprennent des moyens de génération d'un champ électrique variable dans le corps transparent de réfraction.

Le pilotage de la variation du champ électrique dans le corps transparent permet de faire varier l'indice de réfraction dans le corps transparent, et donc de piloter un balayage du faisceau lumineux.

Avantageusement, la constante de Kerr du corps transparent de réfraction est supérieure à 1.10⁻¹² m.V⁻².

La variation de l'indice de réfraction du corps transparent de réfraction, engendrée par la variation du champ électrique dans le corps transparent, par effet Kerr est ainsi particulièrement importante.

Avantageusement, le corps transparent de réfraction est un cristal appartenant au système cristallin trigonal, tétraédrique, hexagonal, triclinique, monoclinique ou orthorhombique.

Le corps transparent est alors biréfringent, et la variation de l'indice de réfraction du milieu, engendrée par la variation du champ électrique dans le corps transparent, se fait également par effet Pockels.

Selon un mode de réalisation, les moyens optiques d'amplification de la déviation de la trajectoire du faisceau lumineux comprennent un miroir convexe, par exemple cylindrique ou sphérique.

Selon un autre mode de réalisation, les moyens optiques d'amplification de la déviation de la trajectoire du faisceau lumineux comprennent une lentille, préférentiellement divergente.

Ces moyens optiques permettent d'amplifier simplement et efficacement le balayage du faisceau lumineux par le corps de déviation afin d'atteindre un angle de secteur angulaire satisfaisant.

Avantageusement, le système d'éclairage comprend de plus des moyens d'absorption du faisceau lumineux destinés à absorber le faisceau lumineux lorsque le corps de déviation est dans une position prédéterminée de repos.

On prévoit également selon l'invention un procédé de mise en sécurité d'un système d'éclairage, caractérisé en ce que le système d'éclairage est tel que défini plus haut et en ce que, lorsque les moyens de pilotage du corps de déviation sont désactivés, on place le corps de déviation dans sa position de repos.

Ainsi, lorsque le corps de déviation est dans sa position de repos, les moyens d'absorption absorbent le faisceau lumineux de manière à éviter la détérioration du système d'éclairage par échauffement.

Avantageusement, le système d'éclairage comprend en outre des moyens de pilotage de la source de lumière.

On prévoit également selon l'invention un procédé de mise en sécurité d'un système d'éclairage caractérisé en ce que le système d'éclairage est tel que défini plus haut et en ce que, lorsque les moyens de pilotage du corps de déviation sont désactivés, on désactive la source de lumière à l'aide des moyens de pilotage de cette source de lumière.

On évite ainsi la détérioration du système d'éclairage par échauffement au cas notamment où les moyens de pilotage sont désactivés de façon intempestive.

L'invention sera mieux comprise à la lecture de la description qui va suivre donnée uniquement à titre d'exemple et faite en référence aux dessins dans lesquels :
- la figure 1 est une vue schématique d'un système d'éclairage selon un premier mode de réalisation de l'invention,
- les figures 2 à 4 sont des vues d'un système d'éclairage similaires à celle de la figure 1 selon des second à quatrième modes de réalisation,
- la figure 5 est une vue simplifiée d'un système d'éclairage selon l'invention, et
- la figure 6 est une vue à plus grande échelle des moyens d'absorption du système d'éclairage de la figure 1.

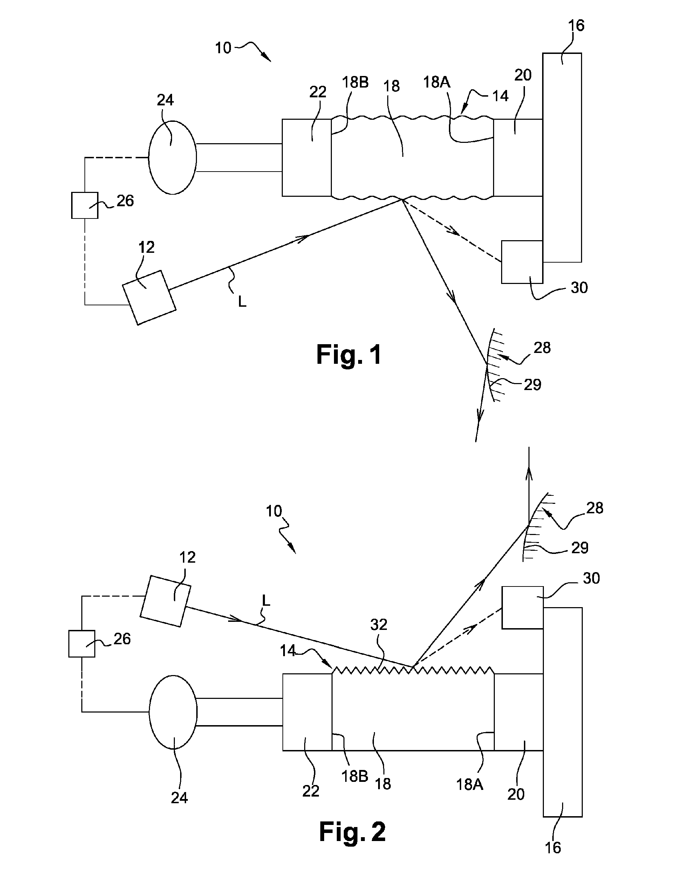

En référence à la figure 1, un système d'éclairage 10 pour véhicule automobile, selon un premier mode de réalisation de l'invention, comprend une source de lumière 12 classique. Celle-ci comporte par exemple une diode laser (non représentée) émettant un faisceau lumineux sensiblement monochromatique L.

Des moyens statiques 14 pour balayer le faisceau lumineux sont placés sur la trajectoire du faisceau lumineux L. Ces moyens statiques de balayage 14 comprennent un support fixe 16, solidaire d'autres éléments optiques du système d'éclairage 10, notamment de la source de lumière 12, et un corps de déviation 18 fixé à ce support 16. Le corps de déviation 18 est ici formé par un barreau métallique, dont le coefficient de réflexion est proche de 1, de manière à ce que la déperdition de puissance optique du faisceau lumineux L par absorption dans le barreau soit la plus faible possible. L'inclinaison du corps de déviation 18 permet la déviation du faisceau lumineux L au moyen d'une surface latérale réfléchissante du corps de déviation 18.

Le corps réfléchissant 18 est relié au support 16 par l'intermédiaire d'un absorbeur 20 placé entre une extrémité 18A du corps réfléchissant 18 et le support 16. On verra dans la suite que l'orientation du corps réfléchissant 18 et l'absorbeur 20 sont intéressants pour le fonctionnement du système d'éclairage 10.

Les moyens statiques de balayage 14 comprennent également un corps déformable 22 placé en contact avec l'autre extrémité 18B du corps réfléchissant 18. Le corps déformable 22 est en l'espèce un transducteur piézoélectrique classique, constitué par exemple de quartz.

Le corps réfléchissant 18 est donc intercalé entre l'absorbeur 20 et le corps déformable 22 en étant en contact par ses extrémités respectives 18A et 18B avec cet absorbeur 20 et ce corps 22

Des moyens de pilotage 24 du corps de déviation 18 sont connectés au transducteur piézoélectrique 22. Ces moyens 24 permettent de piloter le courant délivré au transducteur piézoélectrique 22 par une source d'alimentation (non représentée), par exemple la batterie du véhicule dans lequel est monté le système d'éclairage 10.

Lorsque les moyens de pilotage 24 du corps de déviation 18 sont désactivés, c'est-à-dire lorsqu'ils pilotent la délivrance d'un courant nul au transducteur piézoélectrique 22, le corps de déviation 18 occupe une position prédéterminée dite de repos.

Des seconds moyens de pilotage 26 sont connectés à la source de lumière 12 et aux moyens de pilotage 24. Lorsque ces derniers sont désactivés, de sorte que le corps de déviation 18 occupe sa position de repos, les seconds moyens de pilotage 26 détectent cette mise en position de repos et désactivent la source de lumière 12. Le système d'éclairage 10 est ainsi mis en sécurité.

Les moyens statiques de balayage 14 comprennent également des moyens optiques 28 d'amplification de la déviation de la trajectoire du faisceau lumineux L, placés en aval du corps de déviation 18 en considérant le sens de propagation du faisceau lumineux L. Ces moyens optiques 28 d'amplification sont ici formés par un miroir convexe cylindrique 29, mais on peut prévoir, en variante qu'ils soient formés par un miroir convexe sphérique ou bien par une lentille, préférentiellement divergente. Ces moyens 28 permettent de dévier une seconde fois le faisceau lumineux L émis par la source de lumière 12. A titre d'exemple de réalisation, le miroir cylindrique 29 peut avoir un rayon de courbure de 25 millimètres. On verra dans la suite que les propriétés géométriques des moyens optiques d'amplification 28 sont intéressantes pour l'utilisation qui en est faite.

Des moyens classiques d'absorption 30 sont placés sur le trajet optique du faisceau lumineux L, en aval des moyens statiques de balayage 14. Ces moyens d'absorption 30 sont positionnés de façon à absorber le faisceau lumineux L lorsque le corps de déviation 18 est dans sa position de repos, le faisceau lumineux L ne rencontrant pas les moyens d'absorption 30 lorsque les moyens de pilotage 24 pilotent le courant délivré au transducteur piézoélectrique 22. On évite ainsi tout risque de détérioration, causée par exemple par un échauffement des éléments du système d'éclairage 10 en cas de défaillance des moyens de pilotage 24 et d'exposition prolongée de ces éléments au faisceau lumineux L.

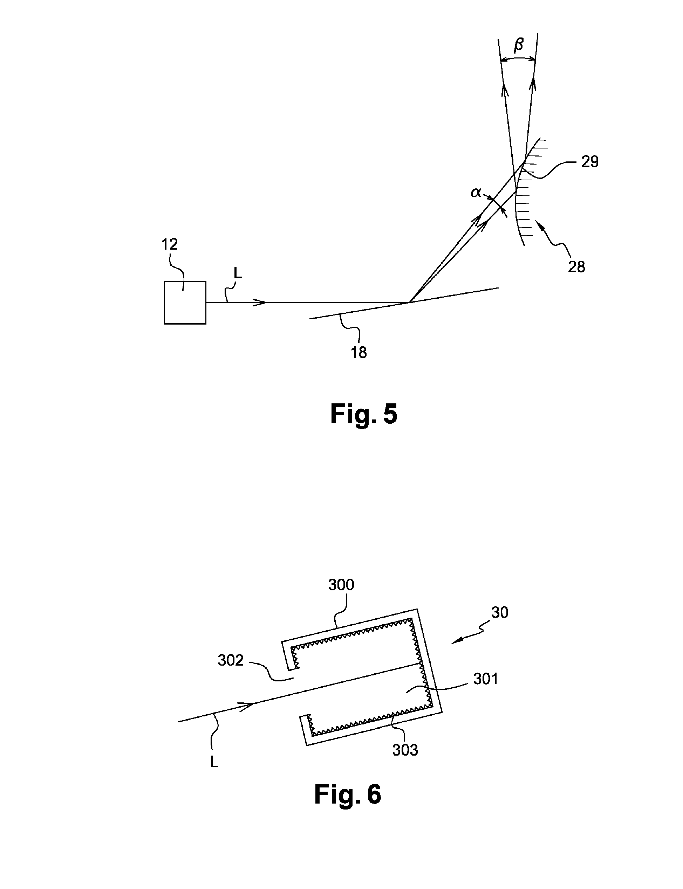

A titre d'exemple de réalisation, et en référence à la figure 6, ces moyens d'absorption 30 comportent une boîte 300 présentant une cavité 301 et une ouverture 302. Des parois de la cavité sont couvertes d'un revêtement absorbant 303, par exemple une peinture noire mate diffusante ou une anodisation. Lorsque le corps de déviation 18 est dans sa position de repos, le rayon L entre dans la cavité par l'ouverture 302. Il impacte la paroi du fond de la boîte 300 et est essentiellement absorbé par le revêtement 303. La faible proportion de lumière réfléchie est diffusée dans la boîte 300 ou elle est elle-même essentiellement absorbée par le revêtement absorbant 303. Seule une infime proportion de la lumière est susceptible de ressortir par l'ouverture 302.

On va maintenant décrire le fonctionnement du système d'éclairage 10.

La source de lumière 12 émet un faisceau lumineux monochromatique L en direction des moyens statiques de balayage 14. En particulier, le faisceau lumineux L est réfléchi par le corps de déviation 18. Les moyens de pilotage 24 pilotent le courant délivré au transducteur piézoélectrique 22 pour y engendrer une déformation oscillante.

En se déformant ainsi, le transducteur piézoélectrique 22 transmet une onde de pression stationnaire au corps réfléchissant 18. Ce dernier étant intercalé entre, d'une part, le transducteur piézoélectrique 22 soumis à des déformations oscillantes, et, d'autre part, l'absorbeur 20 fixé au support 16, l'onde de pression engendre la formation d'un réseau de diffraction sur la surface latérale réfléchissante du corps de déviation 18, dont le pas est égal à la période spatiale de l'onde de pression stationnaire, c'est-à-dire l'espace entre des ventre et noeud successifs de l'onde de pression stationnaire. Le pas du réseau de diffraction est ainsi fonction de la fréquence de l'onde de pression.

L'angle de diffraction étant fonction du pas du réseau de diffraction, les moyens de pilotage 24 du corps de déviation 18 sont ainsi des moyens de génération d'une onde de pression stationnaire dans le corps de déviation 18, cette onde étant réglable en fréquence pour balayer le faisceau lumineux L.

En référence à la figure 5, le faisceau lumineux L est balayé dans un premier secteur angulaire α non nul par diffraction sur le corps réfléchissant 18, l'angle de diffraction étant piloté par le pilotage de la fréquence de l'onde de pression stationnaire par les moyens de pilotage 24. A titre d'exemple de réalisation, en utilisant un transducteur piézoélectrique 22 classique et des moyens de pilotage 24 classiques, l'angle α du premier secteur angulaire est de l'ordre de 1,5°.

Le faisceau lumineux L se propage ensuite jusqu'au miroir cylindrique 29. La courbure de ce dernier a pour effet d'amplifier la déviation faisceau lumineux L, qui est alors balayé sur un second secteur angulaire β. Avec un miroir cylindrique 29 de rayon de courbure de 25 millimètres et une distance traversée par le faisceau lumineux L entre le corps réfléchissant 18 en position de repos et le miroir cylindrique 29 de l'ordre de 35 millimètres, l'angle β du second secteur angulaire est de l'ordre de 15°.

Le faisceau lumineux L se propage ensuite jusqu'à un dispositif de conversion de longueur d'onde (non représenté) connu en soi, comprenant par exemple du phosphore. Ce dernier forme alors une image lumineuse blanche résultant du balayage du faisceau lumineux monochromatique L. L'image lumineuse est ensuite projetée par des moyens de projection (non représentés) connus en soi de manière à émettre la lumière vers un espace à éclairer.

Pour assurer la sécurité du système d'éclairage 10 à l'égard notamment d'incidents de fonctionnement imprévisibles, lorsque les moyens de pilotage 24 sont désactivés, on place le corps de déviation 18 dans sa position de repos, et on désactive la source de lumière 12 à l'aide des moyens de pilotage 26 de cette source de lumière 12.

Dans ce qui suit on décrira d'autres modes de réalisation du système d'éclairage 10 selon l'invention en se référant aux figures 2 à 4. Sur ces figures 2 à 4, les éléments analogues aux figures 1 et 5 sont désignés par des références identiques.

On a illustré en figure 2 un second mode de réalisation du système d'éclairage 10 selon l'invention, différant du premier mode de réalisation en ce que le corps de déviation 18 est un corps réfléchissant comportant une surface réfléchissante 32 du faisceau lumineux formant un réseau de diffraction. L'onde de pression stationnaire a alors pour effet de modifier le pas de ce réseau de diffraction déjà existant, de manière à modifier de diffraction du faisceau lumineux. Le faisceau lumineux L est alors balayé par les moyens statiques de balayage 14.

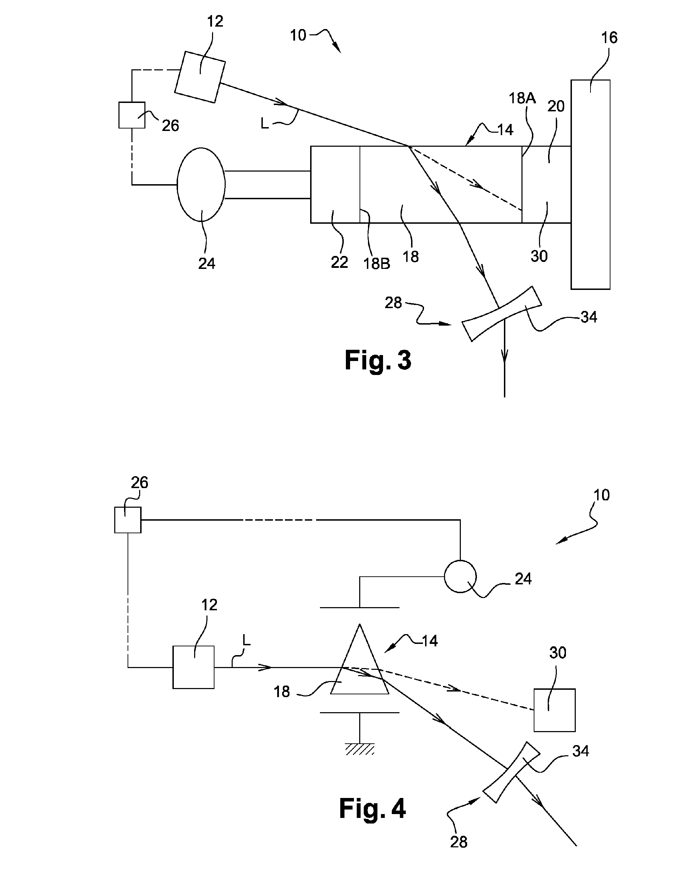

On a illustré en figure 3 un troisième mode de réalisation du système d'éclairage 10 selon l'invention, différant des modes de réalisation présentés précédemment en ce que le corps de déviation 18 est un corps cette fois transparent, traversé par le faisceau lumineux L. Les moyens de pilotage 24 du corps de déviation 18 comprennent toujours des moyens de génération d'une onde de pression stationnaire dans le corps transparent, cette onde étant pilotable en fréquence pour balayer le faisceau lumineux L.

L'onde de pression stationnaire fait perdre au corps transparent 18 l'uniformité de son indice de réfraction, qui présente alors des minima locaux et des maxima locaux correspondant aux noeuds et aux ventres de l'onde de pression stationnaire. La non-uniformité de l'indice de réfraction dans le corps transparent 18 entraîne une réfraction continue pilotée du faisceau lumineux L se propageant dans le corps transparent 18. Le pilotage de la fréquence permet de piloter la position des noeuds et des ventres de l'onde, et donc de piloter un balayage du faisceau lumineux L.

Dans ce mode de réalisation, les moyens optiques d'amplification 28 de la déviation du faisceau lumineux sont une lentille divergente 34, et l'absorbeur 20 constitue les moyens d'absorption 30. On peut néanmoins prévoir que le système d'éclairage 10 comprenne des moyens d'absorption 30 qui soient distincts de l'absorbeur 20.

On a illustré en figure 4 un quatrième mode de réalisation du système d'éclairage 10 selon l'invention, différant des autres modes de réalisation en ce que le corps de déviation 18 est un corps transparent de réfraction du faisceau lumineux, en l'espèce un prisme, et en ce que les moyens de pilotage 24 du corps de déviation comprennent des moyens classiques de génération d'un champ électrique variable dans le corps transparent de réfraction.

Le pilotage de l'intensité du champ électrique créé dans le corps transparent de réfraction 18 permet d'en modifier l'indice de réfraction par effet Kerr, et des oscillations de l'intensité du champ électrique entraînent un balayage du faisceau lumineux réfracté. Afin que ce changement d'indice soit significatif, de manière à obtenir un balayage couvrant un secteur angulaire d'angle de l'ordre de 1°, le corps transparent de réfraction 18 possède une constante de Kerr supérieure à 1.10⁻¹² m.V⁻². A titre d'exemple de réalisation, le corps transparent de réfraction 18 peut être constitué d'une cellule en verre comprenant du nitrobenzène, dont la constante de Kerr vaut environ 4,4.10⁻¹² m.V⁻².

On peut aussi prévoir que le corps transparent de réfraction 18 soit un cristal appartenant au système cristallin trigonal, tétraédrique, hexagonal, triclinique, monoclinique ou orthorhombique, de sorte que le corps transparent de réfraction 18 soit biréfringent. Le pilotage de l'intensité du champ électrique créé dans le corps transparent de réfraction 18 modifie ainsi également son indice de réfraction par effet Pockels, de manière à accentuer la réfraction du faisceau lumineux L et à accentuer du secteur angulaire balayé. A titre d'exemple de réalisation, le corps transparent de réfraction 18 peut comprendre du niobate de lithium, dont la structure cristalline est trigonale.

Bien entendu, on pourra apporter à l'invention de nombreuses modifications sans sortir du cadre de celle-ci.

On peut prévoir que le pilotage du faisceau lumineux comprenne une boucle de rétroaction de manière à fiabiliser le fonctionnement du système d'éclairage.

On peut choisir d'utiliser, dans chaque mode de réalisation, des moyens optiques d'amplification constitués soit d'un miroir convexe, cylindrique ou sphérique, soit d'une lentille, convergente ou divergente.

On peut prévoir que les moyens optiques d'amplification de la déviation de la trajectoire du faisceau lumineux comprennent un miroir concave qui aura l'avantage de renverser les images par exemple entre la droite et la gauche du faisceau.

On peut encore prévoir d'utiliser un même programme de pilotage des premiers moyens de pilotage pour un projecteur gauche et pour un projecteur droit du véhicule automobile.

On peut prévoir que les moyens d'absorption sont simplement constitués d'une paroi recouverte d'une peinture mate de couleur noire, notamment lorsque ceux-ci sont distincts de l'absorbeur.

## Revendications

1. Système d'éclairage (10) pour véhicule automobile, comprenant
- une source de lumière (12) apte à produire un faisceau lumineux (L), et
- des moyens statiques (14) pour balayer le faisceau lumineux comportant au moins un corps de déviation (18) de la trajectoire du faisceau lumineux et des moyens de pilotage (24) du corps de déviation (18),
**caractérisé en ce que** les moyens statiques de balayage (14) comprennent de plus des moyens optiques (28) d'amplification de la déviation de la trajectoire du faisceau lumineux, placés en aval du corps de déviation (18) en considérant le sens de propagation du faisceau lumineux (L).

2. Système d'éclairage selon la revendication 1, dans lequel le corps de déviation (18) est un corps réfléchissant apte à réfléchir le faisceau lumineux (L), et dans lequel les moyens de pilotage (24) du corps de déviation comprennent des moyens de génération d'une onde de pression stationnaire dans le corps réfléchissant (18), cette onde étant pilotable en fréquence pour balayer le faisceau lumineux (L).

3. Système d'éclairage selon la revendication précédente, dans lequel le corps réfléchissant (18) comporte une surface réfléchissante (32) du faisceau lumineux formant un réseau de diffraction.

4. Système d'éclairage selon la revendication 1, dans lequel le corps de déviation (18) est un corps transparent, traversé par le faisceau lumineux, et dans lequel les moyens de pilotage (24) du corps de déviation comprennent des moyens de génération d'une onde de pression stationnaire dans le corps transparent, cette onde étant pilotable en fréquence pour balayer le faisceau lumineux.

5. Système d'éclairage selon la revendication 1, dans lequel le corps de déviation (18) est un corps transparent de réfraction du faisceau lumineux, par exemple un prisme, et dans lequel les moyens de pilotage (24) du corps de déviation comprennent des moyens de génération d'un champ électrique variable dans le corps transparent de réfraction.

6. Système d'éclairage selon la revendication 5, dans lequel la constante de Kerr du corps transparent de réfraction (18) est supérieure à 1.10⁻¹² m.V⁻².

7. Système d'éclairage selon la revendication 5, dans lequel le corps transparent de réfraction (18) est un cristal appartenant au système cristallin trigonal, tétraédrique, hexagonal, triclinique, monoclinique ou orthorhombique.

8. Système d'éclairage selon l'une quelconque des revendications 1 à 7, dans lequel les moyens optiques (28) d'amplification de la déviation de la trajectoire du faisceau lumineux comprennent un miroir convexe (29), par exemple cylindrique ou sphérique.

9. Système d'éclairage selon l'une quelconque des revendications 1 à 7, dans lequel les moyens optiques (28) d'amplification de la déviation de la trajectoire du faisceau lumineux comprennent une lentille (34), préférentiellement divergente.

10. Système d'éclairage selon l'une quelconque des revendications 1 à 9, comprenant de plus des moyens (30) d'absorption du faisceau lumineux destinés à absorber le faisceau lumineux lorsque le corps de déviation est dans une position prédéterminée de repos.

11. Procédé de mise en sécurité d'un système d'éclairage, **caractérisé en ce que** le système d'éclairage est selon la revendication 10, et **en ce que**, lorsque les moyens de pilotage (24) du corps de déviation sont désactivés, on place le corps de déviation (18) dans sa position de repos.

12. Système d'éclairage selon l'une quelconque des revendications 1 à 10, comprenant en outre des moyens (26) de pilotage de la source de lumière (12).

13. Procédé de mise en sécurité d'un système d'éclairage, **caractérisé en ce que** le système d'éclairage est selon la revendication 12, et **en ce que**, lorsque les moyens de pilotage (24) du corps de déviation sont désactivés, on désactive la source de lumière (12) à l'aide des moyens de pilotage (26) de cette source de lumière.
